**Europäisches Patentamt**

**European Patent Office**

**Office européen des brevets**

(19)

(11) Veröffentlichungsnummer : **0 452 375 B1**

(12) # EUROPÄISCHE PATENTSCHRIFT

(45) Veröffentlichungstag der Patentschrift :
**30.12.92 Patentblatt 92/53**

(51) Int. Cl.$^5$ : **B65G 54/02, H02K 41/02**

(21) Anmeldenummer : **90901571.1**

(22) Anmeldetag : **09.01.90**

(86) Internationale Anmeldenummer :
**PCT/EP90/00043**

(87) Internationale Veröffentlichungsnummer :
**WO 90/08086 26.07.90 Gazette 90/17**

(54) **AUTOMATISCHE GUTTRANSPORTVORRICHTUNG MIT LINEARMOTORGETRIEBENEN TRANSPORTELEMENTEN.**

(30) Priorität : **10.01.89 DE 3900511**

(43) Veröffentlichungstag der Anmeldung :
**23.10.91 Patentblatt 91/43**

(45) Bekanntmachung des Hinweises auf die
Patenterteilung :
**30.12.92 Patentblatt 92/53**

(84) Benannte Vertragsstaaten :
**AT BE CH DE ES FR GB IT LI NL SE**

(56) Entgegenhaltungen :
**EP-A- 0 159 005**
**EP-A- 0 272 897**
**EP-A- 0 294 731**
**DE-A- 3 402 143**
**US-A- 3 787 716**
**IEEE Transactions on Magnetics, Bd. MAG14,**
**Nr. 5, September 1978, IEEE S. 921-923; G.R.**
**Slemon u.a.: "A linear synchronousmotor for**
**urban transit using rare-earth magnets", Abs.**
**1 der Einleitung, Fig.3**

(73) Patentinhaber : **Magnet Motor GmbH**
**Petersbrunner Str. 2**
**W-8130 Starnberg (DE)**

(72) Erfinder : **HEIDELBERG, Götz**
**Am Hügel 16**
**W-8136 Starnberg-Percha (DE)**
Erfinder : **GRÜNDL, Andreas**
**Haseneystr. 20**
**W-8000 München 70 (DE)**
Erfinder : **KROEMER, Joachim**
**Heiglstr. 5**
**W-8190 Wolfratshausen (DE)**
Erfinder : **EHRHART, Peter**
**Saalburgstr. 24a**
**W-8000 München 70 (DE)**

(74) Vertreter : **Klunker . Schmitt-Nilson . Hirsch**
**Winzererstrasse 106**
**W-8000 München 40 (DE)**

## Beschreibung

Die Erfindung betrifft eine Vorrichtung zum Transportieren von Gütern , insbesondere in Fabrikationsstätten, mit Transportelementen, die entlang mindestens einer Bewegungsbahn bewegbar sind, mit einer Linearmotor-Antriebseinrichtung zum angetriebenen Bewegen der Transportelemente, die Statorpole mit Spulen an der Bewegungsbahn aufweist, mit an der Bewegungsbahn angeordneten Sonden, die bei Vorhandensein eines Transportelements, das sich in bestimmter Relativposition zum Sondenort befindet, ansprechen, mit Stromrichtern, von denen den Spulen der Statorpole Strom zuführbar ist, und mit einer elektronischen Steuerung, die aufgrund von Signalen der Sonden die Stromrichter zeitrichtig und vorzeichenrichtig ein- und ausschaltet.

Bei solchen Transportvorrichtungen, die insbesondere für einen automatischen Funktionsablauf ausgebildet sind, geht es nicht nur darum, Transportelemente mit Hilfe eines Linearmotors fahren zu lassen, sondern die elektronische Steuerung soll auch die Aufgabe übernehmen, den Verkehr auf der Bewegungsbahn zu steuern. Üblicherweise müssen die Transportelemente an bestimmten Stationen angehalten werden, um beispielsweise Güter aufzunehmen oder Güter abzugeben.

Aus der DE-OS 37 02 248 ist eine Vorrichtung zum Transportieren von Gütern bekannt, bei der drei Typen von Spulen für die Statorpole vorgesehen sind: Es gibt Halte-Primärspulen, Brems-Primärspulen und Zwischenbeschleunigungs-Primärspulen. Die Verwendung unterschiedlicher Arten von Spulen ist aufwendig, insbesondere bei der Montage muß auf die richtige Verwendung der jeweils benötigten Spulen geachtet werden. Die bekannte Vorrichtung ist als magnetisches Schwebesystem ausgebildet, bei dem der Antrieb über Sekundärleiter am Transportelement erfolgt. Ein solcher Sekundärleiter wird durch eine Verbundplatte aus Aluminiumstahl gebildet, die in mehrere Teile unterteilt ist.

Bei der bekannten Vorrichtung hat die elektronische Steuerung die Aufgabe, anhand der Sonden-Signale die Stromrichter zu steuern, allerdings müssen zunächst die jeweiligen Spulen (Haltespulen, Bremsspulen, Beschleunigungsspulen) ausgewählt werden, bevor dann der eigentliche Steuervorgang des Stroms in den Spulen erfolgt.

Aus der EP-A-0 294 731 ist in Übereinstimmung mit dem Oberbegriff des Anspruchs 1 eine Vorrichtung zum Transportieren von Gütern beschrieben, bei der ein durchgehender Längsstator mit in gleichen Abständen angeordneten Sensoren versehen ist. Diese bekannte Anordnung dient als Transportvorrichtung in einer Produktionsstraße und hat den Zweck, Werkstücke zu bestimmten Arbeitsstationen zu bewegen. Die auf den Transportelementen befindlichen Werkstücke müssen positionsgenau bei den Arbeitsstationen für eine Bearbeitung angeordnet werden. Deshalb ist in der Druckschrift angegeben, daß der Linearmotor zur genauen Positionierung der Transportelemente (Werkstückträger) ausgebildet ist.

In einer Produktionsstraße kommt es jedoch nicht nur auf eine genaue Positionierung der einzelnen Transportelemente an, sondern insbesondere auch auf die Regelung des Verkehrs der einzelnen Transportelemente. Es muß u.a. verhindert werden, daß ein Transportelement auf ein vorausfahrendes oder anhaltendes Transportelement auffährt. Wie eine solche Verkehrsregelung grundsätzlich aussehen könnte, ist in der Druckschrift nicht angegeben.

Der Erfindung liegt die Aufgabe zugrunde, eine Vorrichtung der eingangs genannten Art anzugeben, die einen einfachen Aufbau aufweist und bei der die elektronische Steuerung den Verkehr auf der Bahn sicher und ohne großen Aufwand regelt.

Gelöst wird diese Aufgabe gemäß dem Kennzeichnungsteil des Anspruchs 1 dadurch, daß mehrere Statorpole zu einer Statorpolgruppe zusammengefaßt sind, deren Spulen, vorzugsweise in Serienschaltung, an einen gemeinsamen Stromrichter angeschlossen sind, daß mehrere Statorpolgruppen einen Statorabschnitt bilden, daß jedem Statorabschnitt mindestens eine Sonde zugeordnet ist und daß die elektronische Steuerung aufgrund von Signalen der Sonden die Abstände der Transportelemente bei deren Bewegung einhält.

Der einfache Aufbau ergibt sich u.a. durch die Verwendung gleicher Spulen für sämtliche Betriebsfunktionen. Die "Verkehrsregelung", also insbesondere das Einhalten bestimmter Abstände'zwischen den einzelnen Transportelementen wird durch die Unterteilung der Transportbahn in einzelne Statorabschnitte erreicht, wobei jeder Statorabschnitt mehrere Statorpolgruppen umfaßt. Jeder Statorpolgruppe ist ein Stromrichter zugeordnet. Somit läßt sich innerhalb jedes Statorabschnitts das Transportelement genausteuern, und außerdem erfolgt eine sichere Abstandshaltung von Abschnitt zu Abschnitt.

Durch die erfindungsgemäße Ausgestaltung der Vorrichtung wird eine Güter-Transporteinrichtung für Fabrikationsanlagen geschaffen, die Abschnitt für Abschnitt praktisch identischen Aufbau aufweist. Dementsprechend einfach ist auch die Steuerung. Ferner bietet sich die Möglichkeit, die Bewegungsbahn für die Transportelemente ohne Schwierigkeit zu verlängern. Es können praktisch an jedem beliebigen Punkt der Bewegungsbahn "Stationen" eingerichtet werden, ohne daß irgendwelche zusätzlichen Maßnahmen ergriffen werden müssen. Bei der bekannten Güter-Transportbahn müssen die einzelnen Stationen mit besonderen'Bauteilen ausgerüstet werden, so sind beispielsweise spezielle Sensoren und Magnetanordnungen neben den Haltespulen an jeder Station erforderlich. Soll irgendeine Station an der Bewegungsbahn um ein Stück versetzt werden, so muß bei der bekannten Vorrichtung erhebliche Installationsarbeit geleistet werden. Dieser Aufwand entfällt durch die erfindungsgemäße Ausgestaltung der Vorrichtung. Die universellen Spulen dienen zum Bewerkstelligen sämtlicher Betriebsfunktionen der Transportelemente, insbesondere deren Beschleunigen, Bewegen mit bestimmter Geschwindigkeit, Verzögern und positionsgenaues Anhalten.

Aus dem Stand der Technik sind noch andere Transportsysteme bekannt. So zeigt die US-PS 3 787 716 eine Güter-Transportbahn, bei der die Läufer der Transportelemente mit speziellen Polsensoren ausgestattet sind.

Die EP-A-272 897 zeigt eine Transportbahn mit stationär angeordneten Sonden. Die DE-OS 34 02 143 zeigt eine Transportbahn mit Linearmotorantrieb, wobei zur Geschwindigkeitssteuerung der einzelnen Transportelemente Fühler an der Bahn angeordnet sind.

Bevorzugte Ausgestaltungen der Erfindung sind in den Ansprüchen 2 bis 15 angegeben. Zu einigen dieser Anspruchsgegenstände werden anschließend Ausführungen gemacht, wobei die weiter unten beschriebenen Ausführungsbeispiele die Erfindung im Detail verdeutlichen.

Im Prinzip kann man mit einer einzigen Art von an der Bewegungsbahn angeordneten Sonden auskommen. Die von diesen Sonden gelieferten Signale'versetzen die elektronische Steuerung in die Lage, sowohl das zeitrichtige und vorzeichenrichtige Ein- und Ausschalten der Stromrichter als auch die Abstandsüberwachung der Transportelemente als auch das genaue Anhaltpositionieren der Transportelemente zu leisten. Es ist jedoch bevorzugt und für die Ausbildung der elektronischen Steuerung häufig technisch günstiger, mehrere spezialisierte Sondentypen vorzusehen, insbesondere Fahrsonden, die Signale'für das zeitrichtige Ein- und Ausschalten der Stromrichter liefern, Näherungssonden, die Signale für die Abstandssteuerung der Fahrelemente liefern, und Positioniersonden, die Signale für das positionsgenaue Anhalten der Fahrelemente liefern.

Insgesamt sind Sonden bevorzugt, die auf die Magnetfelder von Magneten an den Transportelementen ansprechen. Als typisches Beispiel seien Hallsonden genannt. Die Sonden können auf die sowieso an den Transportelementen vorhandenen Dauermagnete der Linear-motor-Antriebseinrichtung ansprechen. Man kann aber auch gesonderte Dauermagnete an den Transportelementen vorsehen, auf die die (diversen) Sonden ansprechen. Ferner ist es möglich, an den Transportelementen andersartige Beeinflussungsmittel zum Ansprechenlassen. andersartiger Sonden vorzusehen, wie sie zum Stand der Technik gehören, z.B. Spiegel und optische Sensoren oder dergleichen.

Wenn man, wie bevorzugt, bei den Spulen der Statorpole und/oder den Stromrichtern eine zahlenmäßige Überinstallation vorsieht, besteht eine Leistungsreserve, aufgrund der auch bei Ausfall einzelner Spulen, Spulengruppen, Stromrichter oder dergleichen die Funktionsfähigkeit mit Auslegungs-Antriebsleistung der gesamten Vorrichtung erhalten bleibt.

Die Erfindung und Ausgestaltungen der Erfindung werden nachfolgend anhand von zeichnerisch dargestellten Ausführungsbeispielen noch näher erläutert. Es zeigt:

Figur 1 einen Ausschnitt einer Transportiervorrichtung zur Veranschaulichung einer Linearmotor-Antriebseinrichtung für Transportelemente und der grundsätzlichen Funktionsweise einer elektronischen Steuerung hierfür;

Figur 2 einen kurzen Ausschnitt der Linearmotor-Antriebseinrichtung von Fig. 1 in größeren Maßstab zur Veranschaulichung des technischen Aufbaus;

Figur 3 ein detailliert ausgeführtes, weiteres Ausführungsbeispiel einer elektronischen Steuerung für eine Transportiervorrichtung.

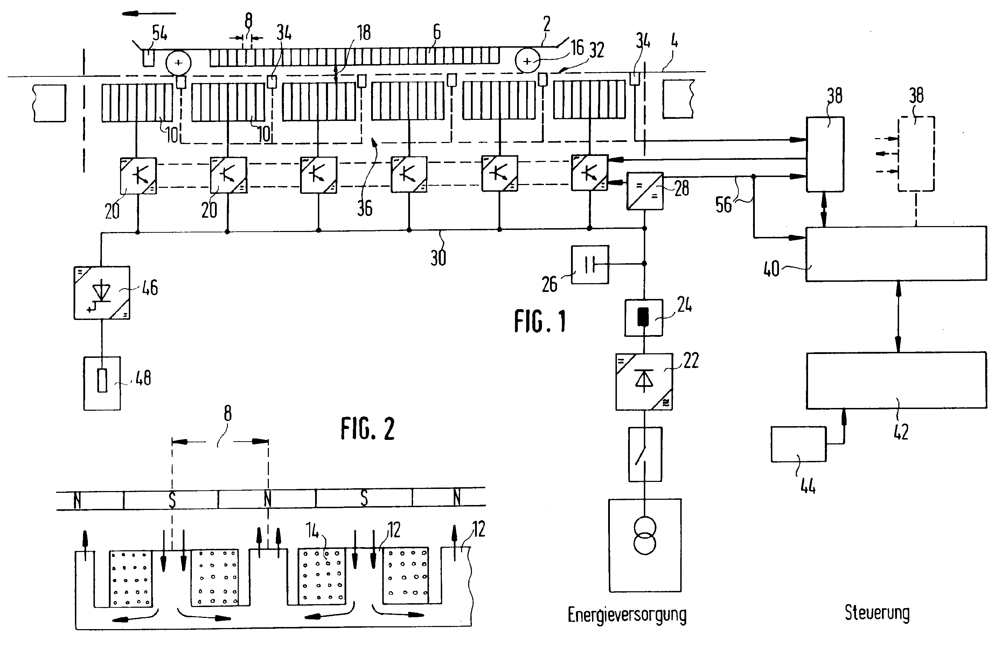

In Fig. 1 ist schematisiert ein Transportelement 2 dargestellt, das längs einer Bewegungsbahn 4, beispielsweise auf dem Boden einer Fabrikhalle, bewegbar ist. An der Unterseite des Transportelementes 2 ist eine sich längs des Transportelements 2 erstreckende Reihe von Dauermagneten 6 mit wechselnder Polung und gleichbleibender Teilung 8 befestigt. Ein konkretes Beispiel sind etwa 30 bis 50 Dauermagnete 6 und eine Länge der Dauermagnetreihe von 3 bis 5 m.

Im Hallenboden 4 versenkt oder oberhalb von diesem sind entlang der Bewegungsbahn eine Vielzahl von Statorelementen 10 hintereinander angeordnet. Jedes Statorelement 10 beinhaltet in Längsrichtung der Bewegungsbahn mehrere Statorpole 12 und Spulen 14 (vgl. Fig. 2). Ein konkretes Beispiel sind etwa 8 bis 12 Statorpole 12 pro Statorelement 10 und eine Länge des Statorelements 10 von etwa 0,8 bis 1,2 m. Innerhalb jedes Statorelements 10 besteht die gleiche Polteilung 8 wie bei der Dauermagnetreihe. Am Übergang von jedem Statorelement 10 zum jeweils benachbarten Statorelement ist die Polteilung etwas größer als innerhalb des Statorelements 10. Die einem Statorelement 10 angehörenden Statorpole 12 werden als Statorpolgruppe, und die einem Statorelement 10 angehörenden Spulen 14 werden als Spulengruppe bezeichnet.

Unten an dem Transportelement 2 sind Räder 16 angeordnet, die auf dem Hallenboden 4 abrollen, um die Dauermagnete 6 auf Abstand von den Statorelementen 10 zu halten. Der vertikal gemessene Luftspalt zwischen den unteren Polflächen der Dauermagnete 6 und den oberen Polflächen der Statorelemente 10 ist mit 18 bezeichnet. Die Dauermagnete 6 bestehen aus Sm-Co-Material oder aus Fe-Nd-Material oder aus Ferritmaterial. Derartige Dauermagnetmaterialien weisen eine magnetische Leitfähigkeit etwa wie Luft, vorzugsweise eine relative Permeabilität von 1 bis 2 auf, so daß kleinere Abweichungen des Luftspalts 18 von der Auslegungsluftspaltweite, beispielsweise aufgrund von Abweichungen des Hallenbodens 4 von einer exakt ebenen Erstreckung oder aufgrund der Zusammendrückung der Bereifung der Räder 16 oder dergleichen keine erheblichen Auswirkungen auf die Antriebsleistung der Linearmotor-Antriebseinrichtung hat. Die Weite des Luftspalts 18 beträgt etwa 10 mm.

Für jedes Statorelement 10 ist ein Stromrichter 20 vorgesehen, der den in Serie geschalteten Spulen 14 des betreffenden Statorelements 10 jeweils kurzzeitig Strom zuführt, und zwar mit zeitlich abwechselnder Stromrichtung. Infolge der Serienschaltung der Spulen 14 ist die durch den zugehörigen Stromrichter 20 fliegende Stromstärke geringer als wenn die Spulen 14 parallel geschaltet wären.

Die gezeichneten sechs Stromrichter 20 sind parallel zueinander an eine gemeinsame Stromversorgung angeschlossen. Die Stromversorgung weist einen Netzgleichrichter 22, eine Drossel 24 sowie einen Kondensator 26 zur Glättung, und ein Schaltnetzteil 28 auf. Das Schaltnetzteil 28 liefert eine oder mehrere Hilfsspannungen, die niedriger als die Stromversorgungsspannung sind und die von den Stromrichtern 20 benötigt werden. Der Bereich zwischen der Stromversorgung und den Stromrichtern 20 wird als Gleichspannungszwischenkreis 30 bezeichnet.

Die gezeichneten sechs Statorelemente 10 stellen zusammen einen Statorabschnitt 32 dar. Jedem Statorelement 10 dieses Statorabschnitts 32 ist an der Bewegungsbahn 4 eine Hallsonde 34 zugeordnet, die auf die Magnetfelder der Dauermagnete 6 des Transportelements 2 anspricht. Die Signale der Sonden 34 bilden die Basis für eine elektronische Steuerung der Linearmotor-Antriebseinrichtung 36. Die elektronische Steuerung weist eine elektronische Motorsteuerungseinheit 38 auf, die aufgrund der Signale der Sonden 34 das zeitrichtige und vorzeichenrichtige Ein- und Ausschalten der Stromrichter 20 steuert. Den Motorsteuereinheiten 38 mehrerer Stromabschnitte 32 übergeordnet ist eine Mikroprozessor-Steuereinheit 40, die weiter unten noch näher erläuterte, zusätzliche Steuerfunktionen leistet. Der Mikroprozessor-Steuereinheit 40 übergeordnet ist eine speicherprogrammierbare Steuerung 42. An die speicherprogrammierbare Steuerung 42 ist eine Bedienungseinheit 44 angeschlossen.

Der Linearmotor-Abschnitt 32 aus sechs Statorelementen 10, der Motorsteuereinheit 38 mit den zugehörigen Sonden 34, den sechs Stromrichtern 20 und ggf. der zugehörigen Stromversorgung bilden zusammen eine Leistungseinheit. An die Mikroprozessor-Steuereinheit 40 und die speicherprogrammierbare Steuerung 42 sind mehrere derartige Leistungseinheiten angeschlossen, so daß auf diese Weise die gesamte Linearmotor-Antriebseinrichtung 36 gebildet wird.

Die Signale der Sonden 34 können ferner eine Basis für die Steuerung gewünschter Abstände der einzelnen Transportelemente 2 auf der Bewegungsbahn 4 bilden. Als Beispiel sei die Steuerungsmöglichkeit genannt, daß die Mikroproezessor-Steuereinheit 40 erst dann wieder eine Einschaltung des Statorabschnitts 32 zuläßt, wenn das betreffende Transportelement 2 den betreffenden Statorabschnitt 32 verlassen hat. Schließlich kann die Sonde 34 auch die Basis für ein positionsgenaues Anhalten des betreffenden Transportelements 2 liefern, beispielsweise durch Unterbrechung der Stromzufuhr beim Passieren des letzten Dauermagneten 6 oder durch Auslösen einer Bremseinrichtung beispielsweise beim Passieren des zehnten Dauermagneten des Transportelements 2. Die "Abstandssteuerung" und die "Bremssteuerung" können der Mikroprozessor-Steuereinheit 40 zugeordnet sein.

Ferner erkennt man in Fig. 1 einen an den Gleichspannungs-Zwischenkreis 30 angeschlossenen Bremschopper 46 und diesem nachgeschaltet einen oder mehrere Bremswiderstände 48. Die beim Verzögern bzw. Bremsen des betreffenden Transportelements 2 freiwerdende Energie wird über den Bremschopper 46 im Bremswiderstand 48 vernichtet. Alternativ ist eine Rückspeisung ins Netz möglich, wobei der Netzgleichrichter 22 als Zweiwegegleichrichter ausgebildet wäre.

Wegen des Versatzes zwischen den Statorelementen 10, der von der Dauermagnetteilung 8 unterschiedlich ist, werden die einzelnen Stromrichter 20 aufgrund der zeitversetzten Signale der Sonden 34 zeitversetzt ein- und ausgeschaltet. Alternativ ist es im Prinzip möglich, mit nur einer Sonde 34 pro Statorabschnitt 32 auszukommen, weil sich aus der Frequenz der Signale der Sonde 34 die Geschwindigkeit des Transportelements ergibt und der erforderliche Zeitversatz beispielsweise in der Motorsteuereinheit 38 oder in der Mikroprozessor-Steuereinheit 40 errechnet werden kann.

Bei dem in Fig. 1 gezeichneten Ausführungsbeispiel sind sämtliche Spulen 14 eines betrachteten Statorelements 10 an einen gemeinsamen Stromrichter 20 angeschlossen und bilden so eine mit gleicher Phase geschaltete Spulengruppe. Alternativ ist es möglich, in andersartiger Zusammenschaltung gleichphasige oder nahezu gleichphasige, an einen gemeinsamen Stromrichter 20 angeschlossene Spulengruppen zu bilden. Wenn beispielsweise der Versatz zwischen den Statorelementen 10 so gewählt ist, daß das ganz links im mittleren Statorabschnitt 32 angeordnete Statorelement 10 und das ganz links im benachbarten Statorabschnitt 32 angeordnete Statorelement 10 einen Gesamt-Versatz von einem oder zwei Dauermagnetteilungen 8 (oder einem Vielfachen davon) hat, kann man beispielsweise die beiden vordersten Spulen 14 dieser beiden Statorelemente 10, gegebenenfalls auch weiterer analog angeordneter Statorelemente 10, an einen gemeinsamen Stromrichter 20 anschließen. Analoges gilt für die zweiten, dritten, ... Spulen 14 jedes Statorelements 10. Dann hat man Statorpolgruppen bzw. Spulengruppen, die längs der Bewegungsbahn 4 auseinandergezogener verteilt sind. Infolgedessen ergibt sich bei Ausfall eines Stromrichters 20 eine weniger ausgeprägte Störung der Antriebsfunktion der Vorrichtung.

Ferner wird darauf hingewiesen, daß die beschriebene Stromversorgung nicht für jede beschriebene Leistungseinheit, elektronisch bestehend im wesentlichen aus einer Motorsteuerungseinheit 38 und einer Anzahl von Stromrichtern 20, getrennt vorgesehen sein muß, obwohl sich dies beispielsweise bei hohen, installierten Antriebsleistungen empfehlen kann. Es ist durchaus möglich, eine gemeinsame Stromversorgung für mehrere Statorabschnitte 32 oder auch für die gesamte Linearmotor-Antriebseinrichtung der gesamten Bewegungsbahn 4 vorzusehen.

Die beschriebenen Leistungseinheiten können dezentral, beispielsweise im wesentlichen räumlich zugeordnet dem jeweiligen Statorabschnitt 32 vorgesehen sein. Alternativ ist es möglich, die Leistungseinheiten insgesamt oder gruppenweise zentral anzuordnen und elektrisch mit den einzelnen Statorabschnitten 32 zu verbinden.

Es ist bevorzugt, gemessen an einer Auslegungs-Antriebsleistung der Vorrichtung, eine Leistungsüberinstallation vorzusehen. Bei dem in Fig. 1 gezeichneten Ausführungsbeispiel wirkt jedes Transportelement .2 antriebsmäßig jeweils gleichzeitig mit vier Statorelementen 10 zusammen. Wenn man beispielsweise die Auslegung so trifft, daß bereits drei Statorelemente 10 die Auslegungs-Antriebsleistung erbringen, kann einer von den vier Stromrichtern 20 oder eines der vier Statorelemente 10 ausfallen, und es bleibt dennoch die Auslegungs-Antriebsleistung erhalten. Bei noch höheren Anforderungen an die Betriebsbereitschaft kann man eine noch stärkere Überinstallation vornehmen.

Die Motorsteuerungseinheit 38 oder die Mikroprozessor-Steuereinheit 40 enthält eine Sollgeschwindigkeitsinformation für die Bewegungsgeschwindigkeit der Transportelemente 2. Mit dieser Sollgeschwindigkeitsinformation wird laufend die über die Sonden 34 erfaßte Istgeschwindigkeitsinformation verglichen, und die Ansteuerung der Stromrichter 20 wird von diesem Vergleich abhängig gemacht.

Ferner sind beispielsweise in der Mikroprozessor-Steuereinheit 40 mehrere Fahrprogramme gespeichert, die sich beispielsweise in der Beschleunigung, der Verzögerung oder der Bewegungsgeschwindigkeit der Transportelemente 2 unterscheiden. Mittels der speicherprogrammierbaren Steuerung 42 oder der Bedienungseinheit 44 läßt sich jeweils ein gewünschtes dieser Fahrprogramme auswählen.

Bei Ausfall der Stromversorgung wird durch die Mikroprozessor-Steuereinheit 40 auf Generatorbetrieb der Statorelemente 10 umgeschaltet. Die infolgedessen im Gleichspannungs-Zwischenkreis 30 anstehende Spannung versorgt das betreffende Schaltnetzteil 28 und hält über die Leitungen 56 die Spannungsversorgung der Motorsteuerungseinheit 38 und der Mikroprozessor-Steuerungseinheit 40 aufrecht, praktisch bis das Transportelement 2 bzw. die Transportelemente 2 mit weiterhin geregeltem Abstand zum Stillstand gekommen sind.

In Fig. 2 erkennt man, daß nur jeder zweite Statorpol 12 mit einer Spule 14 versehen ist bzw. vor und hinter jedem mit einer Spule 14 versehenen Statorpol ein unbewickelter Statorpol 12 vorhanden ist. Diejenigen Statorpole 12, die zugleich Spulenkerne sind, stehen in magnetisch leitender Verbindung mit den unbewickelten Statorpolen 12. Benachbarte Statorelemente 10 sind magnetisch voneinander getrennt. Die Spulen 14 sind als vorgefertigte Einheiten über die entsprechenden Statorpole gesteckt und dort befestigt.

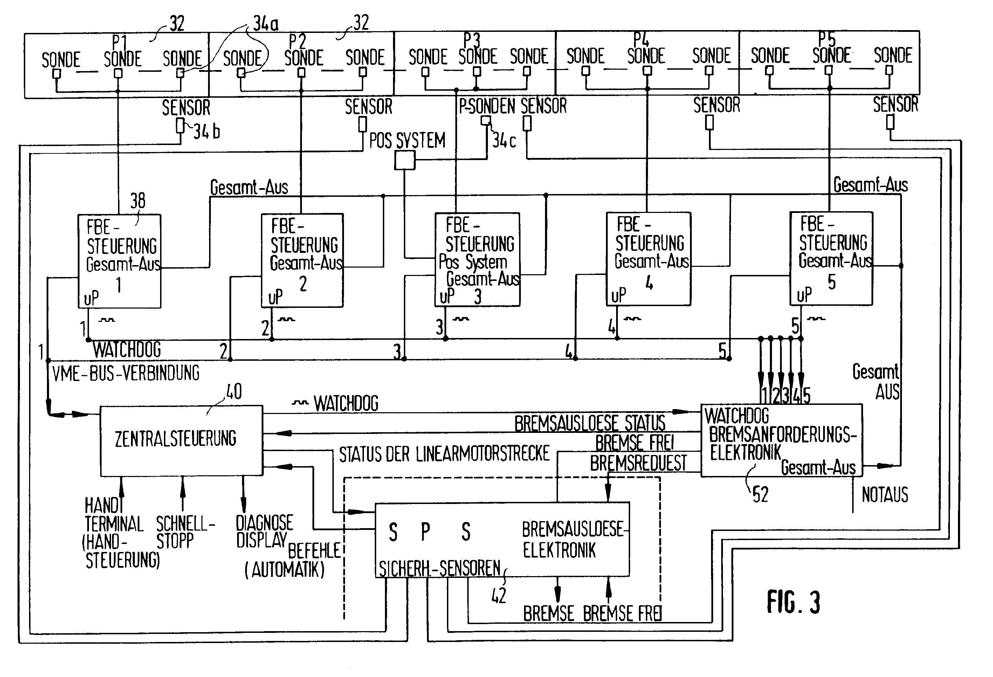

Fig. 3 veranschaulicht eine verfeinerte elektronische Steuerung. Jeder der fünf gezeichneten Statorabschnitte 32 weist - was nicht besonders eingezeichnet ist - sechs Spulengruppen bzw. Statorelemente 10 auf. Jedem Statorabschnitt 32 ist eine elektronische Motorsteuereinheit 38 zugeordnet. Die Motorsteuereinheit 38 ist durch eine Bus-Verbindung (Datensammelschiene) mit der Mikroprozessor-Steuereinheit 40 verbunden. Außerdem sind die Motorsteuereinheiten 38 und die Mikroprozessor-Steuereinheit 40 mit einer Bremsanforderungselektronik 52 verbunden, die ihrerseits wie die Mikroprozessor-Steuereinheit 40 mit der speicherprogrammierbaren Steuerung 42 verbunden ist. Jeder Statorabschnitt 32 weist wiederum sechs Fahrsonden 34a auf (wobei nur drei zeichnerisch angedeutet sind), deren Signale die Basis für das zeitrichtige und vorzeichenrichtige Ein- und Ausschalten der Stromrichter bilden. Jedem Statorabschnitt 32 sind entsprechend der Anzahl der enthaltenen Statorelemente 10 sechs Stromrichter zugeordnet, die nicht gesondert eingezeichnet sind. Jedem Statorabschnitt 32 ist ferner eine Näherungssonde 34b zugeordnet, deren Signale der speicherprogrammierbaren Steuerung 42 zugeführt werden und die Basis für eine Bremsauslösung wegen zu starker Annäherung von Transportelementen bilden. An jedem Statorabschnitt 32 ist schließlich eine Positioniersonde 34c vorgesehen (nur bei einem Statorabschnitt 32 eingezeichnet), deren Signale der betreffenden Motorsteuereinheit 38 zugeführt werden. Aufgrund der Signale der Positioniersonde 34c kann im Zusammenwirken mit der Bremsanforderungselektronik 52 ein Transportelement 2 positionsgenau dort zum Anhalten gebracht werden. Es ist ferner möglich, für das letzte Stück Bewegungsweg um den Positionierpunkt eine Feinregelung vorzusehen. Vorzugsweise spricht die Positioniersonde 34c nicht auf die Dauermagnete 6 an, sondern auf einen gesonderten Positionierungsmagnet 54, der in Fig. 1 angedeutet ist.

In der speicherprogrammierbaren Steuerung 42 sind die jenigen Steuerungsfunktionen konzentriert, die mit dem Umfeld der Fabrikationsstätte zusammenhängen, beispielsweise Reaktion auf Störungen in der Produktzulieferung zur Transportvorrichtung, Umstellung auf eine andere Produktserie oder dergleichen.

Die Bewegungsbahn der Transportvorrichtung kann endlos geschlossen oder offen mit einem Anfangsende und einem Schlußende sein. Auch gekrümmte Bewegungsbahnen sind problemlos bewältigbar. Es versteht sich, daß die Transportelemente 2 bedarfsweise seitlich geführt sind, beispielsweise magnetisch durch die Linearmotor-Antriebseinrichtung, durch seitliche Führungsräder oder dadurch, daß die beschriebenen Räder 16 in rinnenartigen Vertiefungen laufen. Es ist beispielsweise möglich, daß die Transportelemente 2 in allen fünf Statorabschnitten 32 zugleich die genaue Anhaltposition synchron anfahren, selbst wenn die einzelnen Transportelemente 2 unterschiedliche Produktmassen transportieren und unterschiedliche Bewegungswiderstandsverhältnisse herrschen.

In der Regel ist die Auslegung derart, daß zwischen den einzelnen Transportelementen 2 mindestens ein Abstand von der Länge eines Statorelements 10 ist, so daß zu jedem betrachteten Zeitpunkt jedes Statorelement 10 höchstens mit einem Transportelement 2 zusammenwirkt.

**Patentansprüche**

1. Vorrichtung zum Transportieren von Gütern, insbesondere in Fabrikationsstätten, mit Transportelementen (2), die entlang mindestens einer Bewegungsbahn (4) bewegbar sind, mit einer Linearmotor-Antriebseinrichtung (36) zum angetriebenen Bewegen der Transportelemente (2), die Statorpole (12) mit Spulen (14) an der Bewegungsbahn (4) aufweist, mit an der Bewegungsbahn (4) angeordneten Sonden (34), die bei Vorhandensein eines Transportelementes (2), das sich in bestimmter Relativposition zum Sondenort befindet, ansprechen, mit Stromrichtern (20), von denen den Spulen (14) der Statorpole (12) Strom zuführbar ist, und mit einer elektrischen Steuerung, die aufgrund von Signalen der Sonden die Stromrichter zeitrichtig und vorzeichenrichtig ein- und ausschaltet, wobei die Statorpole (12) in Reihe angeordnet und mit einem einzigen Typ von Spulen (14) für alle Betriebsfunktionen ausgestattet sind, an den Transportelementen (2) Dauermagnete (6) in Reihe angeordnet sind und die elektronische Steuerung aufgrund von Signalen der Sonden die Transportelemente (2) positionsgenau anhält,
dadurch gekennzeichnet, daß mehrere Statorpole (12) zu einer Statorpolgruppe (10) zusammengefaßt sind, deren Spulen (14), vorzugsweise in Serienschaltung, an einen gemeinsamen Stromrichter (20) angeschlossen sind,
daß mehrere Statorpolgruppen (10) einen Statorabschnitt (32) bilden,
daß jedem Statorabschnitt mindestens eine Sonde (34) zugeordnet ist und daß die elektronische Steuerung aufgrund von Signalen der Sonden die Abstände der Transportelemente (2) bei deren Bewegung einhält.

2. Vorrichtung nach Anspruch 1, dadurch gekennzeichnet, daß benachbarte Statorpolgruppen (10) um ein von der Dauermagnetteilung (6) an den Transportelementen (2) abweichendes Maß gegeneinander versetzt sind, wobei dieser Teilungsabweichungsversatz bei einem Teil der Statorpolgruppennachbarn oder bei allen Statorpolgruppennachbarn vorgesehen ist.

3. Vorrichtung nach Anspruch 1 und 2, dadurch gekennzeichnet, daß jeweils vor und hinter einem mit einer Spule (14) versehenen Statorpol (12) ein unbewickelter Statorpol (12) vorgesehen ist, der mit dem Spulenkern magnetisch leitend verbunden ist.

4. Vorrichtung nach einem der Ansprüche 1 bis 3, dadurch gekennzeichnet, daß mehrere Stromrichter (20) mit einer gemeinsamen Stromversorgung zu einer Leistungseinheit zusammengefaßt sind, die mit einer elektronischen Steuereinheit (28) ausgestattet ist, wobei für die gesamte Bewegungsbahn (4) eine oder mehrere Leistungseinheiten vorgesehen sind.

5. Vorrichtung nach einem der Ansprüche 1 bis 4, dadurch gekennzeichnet, daß der Luftspalt (18) zwischen den Polflächen der Statorpole (12) und den Polflächen der Dauermagnete (6) 1 bis 15 mm, vorzugsweise 8 bis 12 mm beträgt.

6. Vorrichtung nach einem der Ansprüche 1 bis 5, dadurch gekennzeichnet, daß die Dauermagnete (6) aus einem Material mit magnetischer Leitfähigkeit etwa wie Luft bestehen, so daß sich die Antriebsleistung der Linearmotor-Antriebseinrichtung (36) bei Änderungen des Luftspalts (18) zwischen den Polflächen der Statorpole (12) und den Polflächen der Dauermagnete (6) um einige Millimeter nur geringfügig ändert.

7. Vorrichtung nach einem der Ansprüche 1 bis 6, dadurch gekennzeichnet, daß an der Bewegungsbahn (4) außer Fahrsonden (34a), die Signale für das zeitrichtige und vorzeichenrichtige Ein- und Ausschalten der Stromrichter (20) liefern, gesonderte Näherungssonden (34b) vorgesehen sind, die Signale für die Abstandssteuerung der Transportelemente (2) liefern.

8. Vorrichtung nach einem der Ansprüche 1 bis 7, dadurch gekennzeichnet, daß an der Bewegungsbahn (4) außer Fahrsonden (34a), die Signale für das zeitrichtige und vorzeichenrichtige Ein- und Ausschalten der Stromrichter (20) liefern, gesonderte Positionierungssonden (34c) vorgesehen sind, die Signale für das positionsgenaue Anhalten der Transportelemente (2) liefern.

9. Vorrichtung nach Anspruch 8, dadurch gekennzeichnet, daß an den Transportelementen (2) gesonderte Magnete (54) oder andere Beeinflussungsmittel vorgesehen sind, auf die die Fahrsonden (34a) und/oder die Näherungssonden (34b) und/oder die Positionierungssonden (34c) ansprechen.

10. Vorrichtung nach einem der Ansprüche 1 bis 9, gekennzeichnet durch eine derartige Auslegung, daß ein Anhalten der Transportelemente (2) mit einer Positionsgenauigkeit unter 1 mm möglich ist.

11. Vorrichtung nach einem der Ansprüche 1 bis 10, dadurch gekennzeichnet, daß bei den Spulen (14) der Statorpole (12) und/oder den Stromrichtern (20) eine zahlenmäßige Überinstallation vorgesehen ist, derart, daß bei Ausfall von wenigen Spulen (14) und/oder Stromrichtern (20) ein Betrieb mit der Auslegungs- Antriebsleistung möglich ist.

12. Vorrichtung nach einem der Ansprüche 1 bis 11, dadurch gekennzeichnet, daß die elektronische Steuerung so ausgelegt ist, daß Stromrichter-Steuereinheiten (38) aufgrund einer Sollgeschwindigkeitsinformation und einer aus Sondensignalen ermittelten Istgeschwindigkeitsinformation den Strom zu den angeschlossenen Stromrichtern (20) steuern.

13. Vorrichtung nach einem der Ansprüche 1 bis 12, dadurch gekennzeichnet, daß die elektronische Steuerung einen Speicher für auswählbare Fahrprogramme aufweist.

14. Vorrichtung nach einem der Ansprüche 1 bis 13, dadurch gekennzeichnet, daß die elektronische Steuerung so ausgelegt ist, daß die beim Verzögern der Fahrelemente (2) anfallende Energie in das Netz zurückgespeist und/oder Bremswiderstände (48) zugeführt wird.

15. Vorrichtung nach einem der Ansprüche 1 bis 14, dadurch gekennzeichnet, daß die elektronische Steuerung so ausgelegt ist, daß bei Ausfall der Stromeinspeisung aus dem Netz die durch Verzögerung der Fahrelemente (2) verfügbare Energie zur Versorgung der elektronischen Steuerung genutzt wird.

## Claims

1. A device for transporting products, in particular in factories, with transport elements (2), which are movable along at least one path (4) of movement, with a linear motor drive device (36) for the driven movement of the transport elements (2), which has stator poles (12) with coils (14) along the path (4) of movement, with sensors (34) disposed on the path (4) of movement, which respond when a transport element (2) is located at a set relative position in respect to the sensor location, with power converters (20), from which current can be supplied to the coils (14) of the stator poles (12), and with an electronic control which switches the power converters on and off at the correct times and with the correct sign on the basis of signals of the sensors, with the stator poles (12) being arranged in a row and being equipped with a single type of coils (14) for all operational functions, permanent magnets (6) being disposed in a row on the transport elements (2), and the electronic control stopping the transport elements (2) in an exact position based on signals of the sensors, characterized in that a plurality of stator poles (12) is combined in a stator pole group (10), the coils (14) of which are connected, preferably in series, to a common power converter (20), that a plurality of stator pole groups (10) forms a stator section (32), that at least one sensor (34) is assigned to each stator section, and that the electronic control maintains the distances between the transport elements (2) in the course of their movement on the basis of signals from the sensors.

2. A device in accordance with claim 1, characterized in that adjoining stator pole groups (10) are offset from each other by a distance differing from the permanent magnet spacing (6) on the transport elements (2), this offset from the spacing difference being provided in a portion of the adjoining stator pole groups or in all adjoining stator pole groups.

3. A device in accordance with one of claims 1 and 2, characterized in that a non-wound stator pole (12) each is provided ahead as well as behind of a stator pole (12) equipped with a coil (14), which is connected with the coil core in a magnetically conducting manner.

4. A device in accordance with one of claims 1 to 3, characterized in that a plurality of power converters (20) with a common power supply is combined into a power unit which is equipped with an electronic control unit (28), with one or a plurality of power units being provided for the entire path (4) of movement.

5. A device in accordance with one of claims 1 to 4, characterized in that the air gap (18) between the pole surfaces of the stator poles (12) and the pole surfaces of the permanent magnets (6) is 1 to 15 mm, preferably 8 to 12 mm.

6. A device in accordance with one of claim 1 to 5, characterized in that the permanent magnets (6) consist of a material with a magnetic conductivity approximately that of air, so that the drive output of the linear motor drive device (36) changes only negligibly in case of changes by several millimeters of the air gap (18) between the pole surfaces of the stator poles (12) and the pole surfaces of the permanent magnets (6).

7. A device in accordance with one of claims 1 to 6, characterized in that separate proximity sensors (34b) supplying signals for the distance control of the transport elements (2) are provided on the path (4) of movement in addition to drive sensors (34a) providing signals for switching the power converters (20) on and off at the correct time and with the correct sign.

8. A device in accordance with one of claims 1 to 7, characterized in that separate positioning sensors (34c) supplying signals for the stopping of the transport elements (2) in the exact position are provided on the path (4) of movement in addition to drive sensors (34a) providing signals for switching the power converters (20) on and off at the correct time and with the correct sign.

9. A device in accordance with claim 8, characterized in that separate magnets (54) or other means of influencing are provided on the transport elements (54), to which the drive sensors (34a) and/or the proximity sensors (34b) and/or the positioning sensors (34c) respond.

10. A device in accordance with one of claims 1 to 9, characterized by a layout in such a way that stopping of the transport elements (2) with a positioning accuracy of less than 1 mm is possible.

11. A device in accordance with one of claim 1 to 10, characterized in that a numerically redundant installation is provided in connection with the coils (14) of the stator poles (12) and/or the power converters (20) in such a way, that operation with the design drive output is possible in case a few coils (14) and/or power converters (20) fail.

12. A device in accordance with one of claims 1 to 11, characterized in that the electronic control is laid out in such a way that the power converter control units (38) regulate the current to the connected power converters (20) on the basis of set speed information and of actual speed information determined from sensor signals.

13. A device in accordance with one of claims 1 to 12, characterized in that the electronic control has a memory for selectable drive programs.

14. A device in accordance with one of claims 1 to 13, characterized in that the electronic control is laid out in such a way that the electrical energy generated in the course of deceleration of the drive elements (2) is returned to the power supply and/or is supplied to braking resistors (48).

15. A device in accordance with one of claims 1 to 14, characterized in that the electronic control is laid out in such a way that, in case of failure of the power supply the energy available from the deceleration of the drive elements (2) is utilized for supplying the electronic control.

## Revendications

1. Dispositif de transport de marchandises, en particulier dans les lieux de fabrication, comportant des éléments de transport (1), déplaçables le long d'au moins une trajectoire de déplacement (4), avec un dispositif d'entraînement à moteur linéaire (36), en vue de déplacer de façon entraînée les éléments de transport (2), qui présente des pôles statoriques (12) avec des bobines (14) placées sur la trajectoire de déplacement (4), avec des sondes (34) disposées sur la trajectoire de déplacment (4), réagissant en cas de présence d'un élément de transport (2) se trouvant en des positions relatives déterminées, avec des redresseurs électriques (20), à partir desquels du courant peut être amené aux bobines (14) des pôles statoriques, et avec une commande électrique, mettant les redresseurs en et hors service, sur la base de signaux provenant des sondes, au moment correct et avec le signe correct, les pôles statoriques (12) étant disposés en série et équipés d'un type de bobines (14) unique, pour toutes les fonctions opérationnelles, des aimants permanents (6) étant disposés en série sur les éléments de transport (2) et la commande électronique produisant un arrêt précis en position des éléments de transport (2) du fait des signaux provenant des sondes,

caractérisé en ce que plusieurs pôles statoriques (12) sont groupés pour former un groupe de pôles statoriques (10), dont les bobines (14), de préférence mise en circuit en série, sont raccordées à un redresseur électrique (10) commun,

en ce que plusieurs groupes de pôles statoriques (10) forment un tronçon statorique (32),

en ce qu'au moins une sonde (34) est associée à chaque tronçon statorique et en ce que la commande électronique assure, sur la base de signaux provenant des sondes, le maintien des espacements des éléments de transport (2) lors de leur déplacement.

2. Dispositif selon la revendication 1, caractérisé en ce que des groupes de pôles statoriques (10) voisins sont décalés les uns par rapport aux autres, d'une valeur différant de la distribution des aimants permanents (6) sur les éléments de transport (2), ce décalage sous forme d'écarts par rapport à la distribution étant prévu pour une partie des voisines des groupes de pôles statoriques ou pour tous les voisins de groupes de pôles statoriques.

3. Dispositif selon les revendications 1 et 2, caractérisé en ce qu'est chaque fois prévu, devant et derrière un pôle statorique (12) pourvu d'une bobine (14), un pôle statorique (12) non bobiné, relié au noyau de bobine, de façon conductrice du magnétisme.

4. Dispositif selon l'une des revendications 1 à 3, caractérisé en ce que plusieurs redresseurs électriques (20) sont groupés en constituant une unité de puissance avec une alimentation électrique commune équipée d'une unité de commande électronique (28), une ou plusieurs unités de puissance étant prévues pour l'ensemble de la trajectoire de déplacement (4).

5. Dispositif selon l'une des revendications 1 à 4, caractérisé en ce que l'entrefer (18) entre les faces polaires des pôles statoriques (12) et les faces polaires des aimants permanents (6) est de 1 à 15 mm, de préférence de 8 à 12 mm.

6. Dispositif selon l'une des revendications 1 à 5, caractérisé en ce que les aimants permanents (6) sont composés en un matériau présentant une conductibilité magnétique, à peu près comme celle de l'air, de sorte que la puissance d'entraînement du dispositif d'entraînement à moteur linéaire (36) ne varie que légèrement dans le cas de variations de quelques millimètres de l'entrefer (18) entre les faces polaires des pôles statoriques (12) et des faces polaires des aimants permanents (6).

7. Dispositif selon l'une des revendications 1 à 6, caractérisé en ce que sur la trajectoire de déplacement (4), hors les sondes de déplacement (34a), qui envoient des signaux destinés à produire la mise en et hors circuit à l'instant correct et avec le signe correct des redresseurs électriques (20), sont prévus des sondes de proximité (34b) spéciales, envoyant des signaux destinés à la commande d'espacement des éléments de transport (2).

8. Dispositif selon l'une des revendications 1 à 7, caractérisé en ce que sur la trajectoire de déplacement (4), hors les sondes de déplacement (34a), qui envoient des signaux destinés à produire la mise en et hors circuit à l'instant correct et avec le signe correct des redresseurs électriques (20), sont prévus des sondes de positionnement (34c) spéciales, envoyant des signaux destinés à produire l'arrêt en une position précise des éléments de transport (2).

9. Dispositif selon la revendication 8, caractérisé en ce que sur les éléments de transport (2) sont prévus des aimants spécifiques (54) ou d'autres moyens d'influence, auxquels réagissent les sondes de déplacement (34a) et/ou les sondes de proximité (34b) et/ou les sondes de positionnement (34c).

10. Dispositif selon l'une des revendications 1 à 9, caractérisé par une conception telle qu'un arrêt des éléments de transport (2) est possible avec une précision de position inférieure à 1 mm.

11. Dispositif selon l'une des revendications 1 à 10, caractérisé en ce que pour les bobines (14) des pôles statoriques (12) et/ou les redresseurs électriques (20) est prévue une installation en nombre excédentaire, de telle façon qu'en cas de panne de quelques bobines (14) et/ou redresseurs électriques (20), le fonctionnement soit possible à la puissance d'entraînement nominale.

12. Dispositif selon l'une des revendications 1 à 11, caractérisé en ce que la commande électronique est conçue de telle façon que les unités de commande à redresseurs électriques (38) assurant la commande, sur la base d'un information de vitesse de consigne et d'une information de vitesse réelle déterminée par des signaux provenant des sondes, du courant envoyé aux redresseurs électriques (20) raccordés.

13. Dispositif selon l'une des revendications 1 à 12, caractérisé en ce que la commande électronique présente une mémoire pour des programmes de déplacement sélectionnables.

14. Dispositif selon l'une des revendications 1 à 13, caractérisé en ce que la commande électronique est conçue de telle façon que l'énergie apparaissant dans le cas de ralentissement des éléments de déplacement (2) est réinjectée dans le réseau et/ou amenée à des résistances de freinage (48).

15. Dispositif selon l'une des revendications 1 à 14, caractérisé en ce que la commande électronique est conçue de telle façon qu'en cas de panne de l'injection de courant depuis le réseau, l'énergie disponible de par le ralentissement des éléments de déplacement (2) est utilisée pour alimenter la commande électronique.

**FIG. 1**

Energieversorgung

Steuerung

**FIG. 2**

FIG. 3

EP 0 452 375 B1